# EUROPÄISCHE PATENTSCHRIFT

(11) **EP 2 117 734 B1**
(45) Veröffentlichungstag und Bekanntmachung des Hinweises auf die Patenterteilung: **11.05.2016**
(21) Anmeldenummer: 07700141.0
(22) Anmeldetag: 18.01.2007
(51) Int. Cl.: B08B 3/00, B08B 3/02, B08B 3/14, F02G 5/00

(54) **INDUSTRIELLE REINIGUNGSANLAGE**
INDUSTRIAL CLEANING SYSTEM
INSTALLATION DE NETTOYAGE INDUSTRIEL

(43) Veröffentlichungstag der Anmeldung: 18.11.2009
(73) Patentinhaber: PIV GmbH, 6377 Seelisberg (CH)
(72) Erfinder: MEISSNER, Werner, 51709 Marienheide (DE)
(74) Vertreter: Brandt & Nern Patentanwälte
(86) Internationale Anmeldenummer: PCT/DE2007/000100
(87) Internationale Veröffentlichungsnummer: WO 2008/086761

(56) Entgegenhaltungen:
- DE-A1- 4 208 665
- DE-A1- 10 039 495
- DE-A1- 19 860 751
- DE-B3-102005 049 435
- DE-U1- 29 504 464
- JP-A- 11 351 056

## Beschreibung

Die Erfindung bezieht sich auf eine industrielle Reinigungsanlage mit wenigstens einer Behandlungskammer zum Reinigen von Gegenständen, die mit öl-, fetthaltigen oder anderen Bearbeitungsrückständen verschmutzt sind und mit Behandlungsmedien gereinigt werden, welche zur Verbesserung des Behandlungsergebnisses Prozesswärme benötigen, z. B. zum Erwärmen waschaktiver Reinigungsflüssigkeiten, Spülflüssigkeiten, beispielsweise reinem Wasser oder Luft zum Trocknen im Luftstrom.

Eine derartige Reinigungsanlage, gemäß dem Oberbegriff des Anspruchs 1, ist durch die DE 42 08 665 A1 bekannt. Die bekannte Anlage weist eine Behandlungskammer auf, in der ein Waschgang, ein Spülgang und ein Trocknungsgang nacheinander mit einem Reinigungskreislauf, einem Spülkreislauf und einem Trocknungskreislauf ablaufen, oder bei dem die Reinigung, die Spülung und die Trocknung jeweils in separaten Behandlungskammern ablaufen, wobei der Reinigungskreislauf aus einem Laugenbehälter gespeist wird, der eine mit einer waschaktiven Substanz versetzte wässrige Reinigungsflüssigkeit, und der Spülkreislauf aus einem Spülbehälter gespeist wird, der frisches Wasser enthält, wobei gebrauchte Reinigungs- und/oder Spülflüssigkeit einer Filterung unterzogen werden oder mit Hilfe eines Verdampfers und eines Wärmetauscherkreislaufes zurückgewonnen und dem Laugen- und/oder Spülbehälter wieder zugeführt werden, wobei die Abwärme des Wärmetauscherkreislaufes dazu benutzt wird, um die Reinigungs-, und/oder Spülflüssigkeit oder den Luftstrom zum Trocknen zu erwärmen.

Zum Betrieb des Reinigungskreislaufes der bekannten Anlage ist eine elektrisch betriebene Heizeinrichtung im Laugenbehälter erforderlich, um die Reinigungsflüssigkeit auf Betriebstemperatur zu bringen.

Es sind Elektromotoren, elektrisch betätigte Pumpen verschiedener Bauart, wie Niederdruck- oder Hockdruckpumpen, und elektrisch betätigte Ventile und Absperrschieber sowie elektrische/elektronische Mess-, Steuer-, Regel-Überwachungsgeräte im Reinigungskreislauf zum Messen, Steuern, Regeln und Überwachen des Reinigungskreislaufes vorgesehen. Mit diesen elektrischen Einrichtungen wird die Behandlungskammer bewegt, gedreht oder geschwenkt, oder die Gegenstände in der Behandlungskammer werden bewegt, d. h. gedreht oder geschwenkt mit Hilfe eines Elektroantriebes. Es wird ferner dafür gesorgt, dass die erwärmte Reinigungsflüssigkeit im richtigen Zeitzyklus in die Behandlungskammer gefördert wird, dort für die Dauer der Behandlung verbleibt und nach der Behandlung von dort wieder abgepumpt und einer Aufbereitung, wie Filtrierung oder Destillation, zugeführt wird, das alles mit den genannten elektrischen Einrichtungen.

Zum Betrieb des Spülkreislaufes der bekannten Anlage ist ein ähnlicher Aufwand erforderlich, um die gereinigten Teile von noch anhaftenden, waschaktiven Resten mit der erwärmten Spülflüssigkeit abzuspülen. Für diesen Zweck ist dann im Spülbehälter eine elektrische Heizeinrichtung installiert, wobei die Spülflüssigkeit mit einem ähnlich dem Reinigungskreislauf aufgebauten Spülkreislauf ausgerüstet und gesteuert wird.

Zum Betrieb der Trocknung im erwärmten Luftstrom sind neben den elektrisch betriebenen Lufterhitzern noch zusätzliche elektrische Aggregate, wie Kompressoren und Ventilatoren, erforderlich. Die Rückgewinnung der Wärmeenergie aus der Abwärme durch Destillation deckt nur einen Teil der erforderlichen Energie zum Betrieb der Reinigungsanlage.

Zusammenfassend ist festzustellen, dass die zum Betrieb einer derartigen Reinigungsanlage eingesetzte Elektroenergie zum größten Teil zur Erwärmung der Prozessmedien, wie Wasser, Kohlenwasserstoffen, Luft etc., und zum kleineren Teil zum Betrieb der elektromechanischen Aggregate, wie Pumpen, Motoren, Ventilen, Kompressoren, Ventilatoren, und elektrischen und elektronischen Steuerungen der Anlage verbraucht wird.

Die ökonomische Bilanz einer derartigen, mit elektrischer Energie betriebenen Anlage basiert auf den aktuellen Strompreisen sowie den zur Verfügung stehenden fossilen Energieträgern, wie Kohle, Gas und Öl. Ökonomisch betrachtet belastet jede Kilowattstunde Strom aus dem Netz die Umwelt durch den Ausstoß einer bestimmten Menge CO₂ eines konventionellen Kraftwerkes.

Als Alternative zum monoelektrischen Energieeinsatz ist eine getrennte Nutzung von Strom aus dem Netz für den Betrieb der elektromechanischen Aggregate und der elektrischen und elektronischen Steuerungen der Anlage und die Erzeugung von Prozesswärme mit Hilfe von Gas oder Öl denkbar. Ökonomisch und ökologisch stellt sich ein gewisser Nutzen gegenüber dem monoelektrischen Energieeinsatz ein, jedoch ist für den Betrieb der Anlage stets ein externer Elektrizitätsanschluss erforderlich.

Bekannt sind Systeme zur Kraft-Wärme-Kopplung, die eine gleichzeitige Gewinnung von mechanischer Energie bei unmittelbarer Umwandlung in Elektrizität und nutzbarer Prozesswärme ermöglichen. Es fallen also gleichzeitig Strom und Wärme an, wobei stets der Wärmebedarf den Gesamtprozess bestimmt. Der Vorteil der Kraft-Wärme-Kopplung ist die hohe Ausnutzung der eingesetzten Primärenergie bis zu 85 % Nutzungsgrad.

In der DE 295 044 64 U1 ist eine Anlage zur Verarbeitung von Altholz zur Herstellung eines gleichmäßigen Brennmaterials für Drehöfen in der Zementindustrie beschrieben. Es ist ein mittels Brennkraftmaschine angetriebenes Aggregat zur Erzeugung der Antriebsenergie für die mechanischen Vorrichtungen der Anlage vorgesehen. Zum Trocknen des zerkleinerten Altholzes ist ein Trockner vorhanden, der mit den Abgasen der Brennkraftmaschine beheizt wird. Zusätzlich kann das Kühlwasser der Brennkraftmaschine zum Heizen verwendet werden. Bei der baulichen Ausführung der Anlage wird ein Blockheizkraftwerk eingesetzt.

In der DE 100 39 495 A1 ist eine Offsetdruckanlage mit einer Trocknungseinrichtung zum Trocknen der frisch bedruckten Papierbahn beschrieben. Es ist eine Kraft-Wärme-Kopplung vorgesehen. Dabei werden die heißen Abgase einer Brennkraftmaschine durch einen Wärmetauscher zur Heizvorrichtung der Trocknungsanlage geleitet. Der Kühlkreislauf der Brennkraftmaschine dient zum Heizen des Gebäudes, in der die Anlage steht. Ein weiterer Kühlkreislauf dient zum Betreiben einer Kältemaschine.

Darüber hinaus ist aus der DE 198 60 751 A1 eine Hochdruckstrahl-Anlage zum Reinigen von insbesondere Flächen bekannt, bei welcher die Abwärme einer über ihre Antriebswelle mechanische Energie für eine hydraulische Hochdruckfördereinrichtung bereitstellende Brennkraftmaschine zur Erwärmung des unter Hochdruck gesetzten Fluids verwendet wird. Zwar wird demnach gemäß dieser Lösung eine Art Kraft-Wärme-Kopplung genutzt und außerdem das zur Reinigung verwendete Fluid erforderlichenfalls zusätzlich mit einer elektrischen Heizpatrone erwärmt, für welche der Strom gegebenenfalls durch einen von der Brennkraftmaschine getriebenen Generator bereitgestellt werden kann. Jedoch handelt es sich bei der beschriebenen Anlage nicht um eine komplexe industrielle Reinigungsanlage mit geschlossenen Reinigungs- und Wärmekreisläufen, wie sie etwa in der schon erwähnten DE 42 08 665 A1 beschrieben wird, für deren Betrieb neben Prozesswärme für die Erwärmung zur Reinigung verwendeter Medien auch während des gesamten Prozesses elektrische Energie für eine Mehrzahl elektrischer Aggregate und damit elektrischer Verbraucher bereitzustellen ist.

Die Aufgabe der Erfindung besteht darin, eine industrielle Reinigungsanlage mit einer Mehrzahl elektrische Aggregate so auszubilden, dass sowohl die zur Erwärmung der Reinigung dienender Medien benötigte Prozesswärme als auch die für eine größere Zahl elektrischer Aggregate sowie für die Steuerung einer solchen Anlage benötigte elektrische Energie zuverlässig bereitgestellt und dabei eine vorteilhafte ökonomische und ökologische Bilanz für den Gesamtprozess erreicht wird.

Die Aufgabe wird erfindungsgemäß eine industrielle Reinigungslage mit den Merkmalen des Patentanspruchs 1 gelöst. Weiterbildungen der Erfindung sind in den Unteransprüchen beschrieben.

Bei der Erfindung handelt es sich um eine Kombination von zwei Anlagen, von denen die eine zum Betrieb Prozesswärme und Elektroenergie verbraucht, hier die Reinigungsanlage, und die andere die benötigte Prozesswärme und Elektroenergie erzeugt, durch den Einsatz von Primärenergie, wie Gas oder Mineralöl, in diesem Fall eine als Blockheizkraftwerk ausgebildete Kraft-Wärme-Kopplungsanlage.

Ein Vorteil der Erfindung besteht darin, dass Erzeuger und Verbraucher von Prozesswärme und Elektroenergie zu einer kompakten Baueinheit zusammengeführt werden können. Besonders in Gebieten mit schwach ausgebauter Infrastruktur des elektrischen Energienetzes kann diese Anlagenkombination autark, d. h. unabhängig vom Stromnetz, betrieben werden, wobei die zum Einsatz kommende Primärenergie, wie Gas oder Öl, optimal ausgenutzt wird. Durch den hohen Nutzungsgrad der eingesetzten Primärenergie kann die Anlagenkombination sehr wirtschaftlich betrieben werden. Besonders interessant gestaltet sich die ökologische Bilanz. Für kleine bis mittlere Anlagen errechnet sich die CO₂ Emission bis zu 5 bis 8 kg/Stunde. Bei einer jährlichen Betriebsdauer der Anlagenkombination von ca. 5000 Stunden ergibt sich ein Einspareffekt von 35 t jährlich bis 40 t jährlich.

Im Einzelnen sind der Kühlkreislauf der Kraft-Wärme-Kopplungsanlage und der Heizkreislauf der Reinigungsanlage miteinander verbunden, so dass mit der Kraft-Wärme-Kopplungsanlage die Prozesswärme für die Prozessmedien der Reinigungsanlage erzeugt wird. Die Abgabe der Prozesswärme der Kraft-Wärme-Kopplungsanlage an die Prozessmedien der Reinigungsanlage erforgt über Wärmetauscher, die bei einer Einkammer-Reinigungsanlage vorteilhaft in die Reinigungsflüssigkeits- und/oder Spülflüssigkeitsbehälter eingebaut sind. Bei Mehrkammeranlagen können die Wärmetauscher in die jeweiligen Behandlungskammern eingebaut sein.

Kraft-Wärme-Kopplungsanlagen arbeiten besonders wirtschaftlich mit einer ca. 70 %igen Wärmeerzeugung und einer 30 %igen Stromerzeugung. Vorteilhaft ist es, die Energiebedarfsaufteilung an Prozesswärme und Elektrizität der Reinigungsanlage der Prozesswärmeerzeugung und Elektrizitätserzeugung der Kraft-Wärme-Kopplungsanlage anzupassen.

In der Anlaufphase des Reinigungsprozesses, also beim Hochfahren der Anlage, wenn überwiegend Wärme benötigt wird, wird der erzeugte Strom dazu verwendet, mit Hilfe von Elektroheizkörpern zur Prozesswärmeerzeugung beizutragen. Dazu sind die Elektroheizkörper vorteilhaft als Tauchheizkörper ausgeführt und in die entsprechenden Reinigungsflüssigkeitsbehälter und/oder Spülflüssigkeitsbehälter eingebaut. Dadurch wird eine nahezu 100 %ige Ausnutzung der erzeugten Energie erreicht. Mit der bei der Elektroenergieerzeugung entstehenden Wärme heizt der Kühlkreislauf der Kraft-Wärme-Kopplungsanlage die Prozessmedien direkt oder über Wärmetauscher parallel auf. Im Betrieb der Anlage wird der elektrische Strom der Kraft-Wärme-Kopplungsanlage von den elektrischen Aggregaten, wie Pumpen und Kompressoren, benötigt. Die Wärme aus dem Kühlkreislauf der Kraft-Wärme-Kopplungsanlage wird benutzt, um die Prozessmedien auf Betriebstemperatur zu halten. Mit Hilfe einer elektrischen oder elektronischen Steuerung kann der Einsatz der Prozesswärmeanteile gesteuert werden.

Die Kraft-Wärme-Kopplungsanlage ist, wie bereits ausgeführt, als Blockheizkraftwerk mit einem flüssigkeitsgekühlten Verbrennungsmotor ausgeführt. Als Kühlflüssigkeit kann Wasser, Kohlenwasserstoff oder Thermoöl verwendet werden. Die Betriebstemperatur einer Reinigungsanlage mit einer wässrigen Reinigungsflüssigkeit liegt zwischen 50°C und 90°C. In geschlossenen Prozesswärmekreisläufen kann die Betriebstemperatur über 100°C betragen. Um separate Wärmetauscher in den Kreisläufen zu vermeiden, kann die Kühlflüssigkeit des Verbrennungsmotors als Reinigungs- oder Spülflüssigkeit verwendet und dementsprechend über Reinigungs- oder Spülflüssigkeitsbehälter geführt werden.

Nachfolgend sind anhand von Blockschaltbildern zwei Ausführungsbeispiele der Erfindung näher beschrieben.

Es zeigen:
- Fig. 1:: Eine Einkammerausführung der Reinigungsanlage;
- Fig. 2:: Eine Reinigungsanlage mit drei Behandlungskammern.

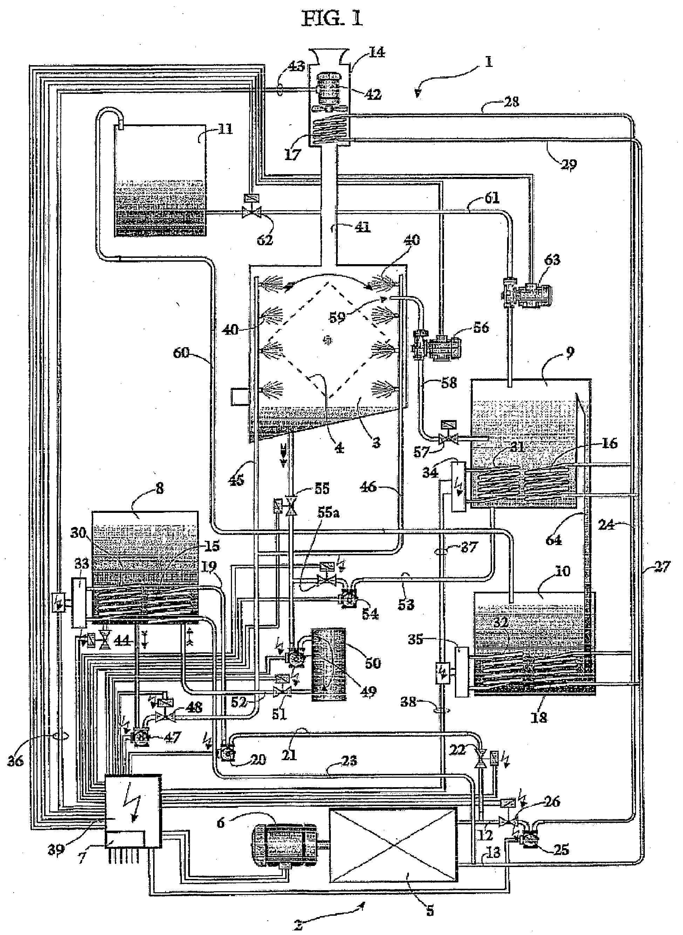

Es handelt sich bei der Ausführung der Erfindung gemäß Fig. 1 um die Kombination einer Reinigungsanlage 1 mit einer Kraft-Wärme-Kopplungsanlage 2. Bei der Reinigungsanlage 1 handelt es sich um eine Einkammerausführung mit nur einer Behandlungskammer 3, in der die hier nicht dargestellten Gegenstände oder Teile mit Hilfe einer dreh- oder schwenkbaren Aufnahme 4 nacheinander gereinigt, gespült und getrocknet werden. Die Kraft-Wärme-Kopplungsanlage 2 besteht aus einem Verbrennungsmotor 5 und einem Generator 6. Die Kraft-Wärme-Kopplungsanlage 2 ist als Blockheizkraftwerk ausgeführt und in den Anlagenkreislauf der Reinigungsanlage 1 integriert. Als Primärenergie für den Verbrennungsmotor 5 dient Gas oder Dieselkraftstoff. Mit der Kraft-Wärme-Kopplungsanlage 2 wird die Prozesswärme für die Prozessmedien, wie Reinigungsflüssigkeit, Spülflüssigkeit und Warmluft zum Trocknen, und elektrischer Strom zum Betreiben der elektrischen Aggregate, wie Pumpen, Ventile, sowie der gesamten elektrischen und elektronischen Steuereinrichtung 7 erzeugt.

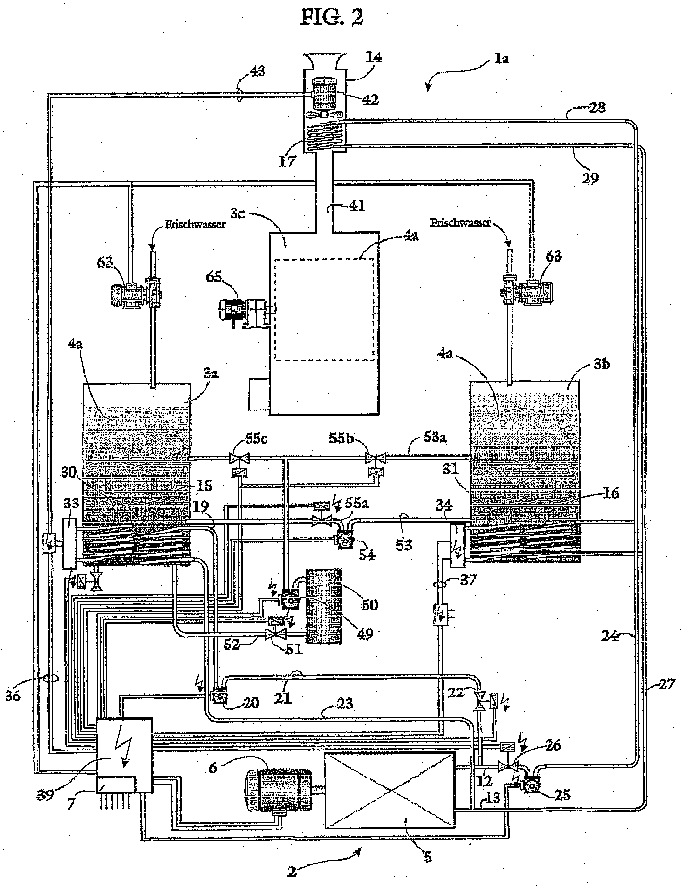

Bei der Ausführung der Erfindung gemäß Fig. 2 handelt es sich um eine Reinigungsanlage 1a, die mehrere Behandlungskammern, nämlich eine Reinigungskammer 3a, eine Spülkammer 3b und Trocknungskammer 3c aufweist, in denen die Teile nacheinander umgesetzt und gereinigt, gespült oder getrocknet werden. Es kann sich dabei um wannenartige Behälter handeln, in denen die zu reinigenden Teile zwecks Behandlung eingetaucht und gedreht oder geschwenkt werden.

Die Reinigungsanlage 1 nach Fig. 1 weist außer der Behandlungskammer 3 noch einen Reinigungsmittelbehälter 8, einen Spülflüssigkeitsbehälter 9, einen Verdampfer 10 sowie einen Auffangbehälter 11 für das im Verdampfer 10 erzeugte Destillat auf.

Aufbau und Wirkungsweise einer Kraft-Wärme-Kopplungsanlage sind hinlänglich bekannt, so dass auf eine detaillierte Beschreibung der verwendeten Kraft-Wärme-Kopplungsanlage 2 verzichtet werden kann. Wichtig ist, dass die gesamte Abwärme des Verbrennungsmotors 5, also auch die Abgase, zur Erzeugung der Prozesswärme genutzt werden können. Zur Weiterleitung der Prozesswärme an die Reinigungsanlage 1, 1a dient ein Rohrleitungsnetz mit einem Primärstrang 12 und einem Sekundärstrang 13. Es handelt sich dabei um einen geschlossenen Wärmekreislauf. Zur Übertragung der Prozesswärme vom Verbrennungsmotor 5 zum Reinigungsmittelbehälter 8, Spülflüssigkeitsbehälter 9 bzw. der Reinigungskammer 3a, der Spülkammer 3b und dem Lufterhitzer 14 sowie zum Verdampfer 10 dient vorzugsweise Thermoöl oder Kohlenwasserstoff. Mit diesen Übertragungsmedien sind Prozesstemperaturen der Reinigungsanlage 1 bis über 100°C erreichbar, so dass auch der Verdampfer 10 weitgehend mit Prozesswärme betrieben werden kann und eventuell lediglich im oberen Temperaturbereich zusätzliche Primärenergie eingesetzt werden muss.

Die Abgabe der Prozesswärme an die Reinigungsflüssigkeit, Spülflüssigkeit oder Trocknungsluft sowie an das Verdampfermedium, in diesem Falle gebrauchte Reinigungsflüssigkeit oder Spülflüssigkeit, erfolgt über Wärmetauscher 15, 16, 17, 18, die in dem Reinigungsmittelbehälter 8 bzw. der Reinigungskammer 3a, dem Spülflüssigkeitsbehälter 9 bzw. der Spülkammer 3b, dem Lufterhitzer 14 sowie dem Verdampfer 10 eingebaut sind. Der Wärmetauscher 15 ist primärseitig über Leitungen 19, 21, der Pumpe 20 und dem elektrischen Ventil 22 an den Primärstrang 12 angeschlossen, während sekundärseitig der Anschluss an den Sekundärstrang 13 über die Leitung 23 erfolgt. Der Wärmetauscher 16 ist primärseitig über die Leitung 24, der Pumpe 25 und dem Ventil 26 an den Primärstrang 12 angeschlossen. Über die Leitung 27 erfolgt der Anschluss an den Sekundärstrang 13. Die gleiche Anschlusssituation ergibt sich für den Wärmetauscher 18 im Verdampfer 10, wobei es erforderlich sein kann, diesen Wärmetauscher 18 separat oder über Bypass an den Primärstrang 12 und Sekundärstrang 13 anzuschließen, um jeden einzelnen Wärmetauscher 15, 16, 18 einzeln steuern zu können. Dasselbe gilt auch für den Wärmetauscher 17 im Lufterhitzer 14, der hier primärseitig über die Leitung 28, 24 und Pumpe 25 und Ventil 26 an den Primärstrang 12 angeschlossen ist. Sekundärseitig erfolgt der Anschluss über die Leitung 29, 27 an den Sekundärstrang 13.

In den Ausführungsbeispielen der Erfindung sind zusätzlich zu den Wärmetauschern 15, 16 und 18 im Reinigungsmittelbehälter 8, in der Reinigungskammer 3a, Spülflüssigkeitsbehälter 9, in der Spülkammer 3b und Verdampfer 10 elektrische Heizeinrichtungen 30, 31. 32 eingebaut, die über elektrische Anschlussleitungen 33, 34, 35 und Verbindungsleitungen 36, 37, 38 an eine zentrale Anschluss- und Verteileinrichtung 39 des Generators 6 angeschlossen sind. Die Anschluss- und Verteileinrichtung 39 enthält auch die elektrische und/oder elektronische Steuereinrichtung 7 der Anlage, mit der alle Komponenten und Verfahrenszyklen der Kombianlage mittels Sensoren überwacht und gesteuert werden können. Die entsprechenden Steuerleitungen sind wegen der Übersichtlichkeit der Zeichnung weggelassen. Die Heizeinrichtungen 30, 31, 32 können beispielsweise in der Anfahrphase der Reinigungsanlage zugeschaltet werden, um die Anlage möglichst schnell betriebsbereit zu haben, sie können aber auch in Abhängigkeit vom Reinigungszyklus und dem Prozesswärmebedarf zu oder abgeschaltet werden oder permanent in Betrieb sein.

Die Behandlungskammer 3 gemäß Fig. 1 ist mit Spritz- oder Sprühdüsen 40 ausgerüstet, zwischen denen die mit Hilfe eines Elektroantriebes drehbare Aufnahme 4 angeordnet ist, in dem sich die nicht dargestellten, zu reinigenden Teile befinden, z. B. diverse Kleinteile oder große Werkstücke, wie Mötorteile. Aus dem Reinigungsmittelbehälter 8 wird über die Leitung 44, 45, 46 mit Hilfe der elektrischen Pumpe 47 Reinigungsflüssigkeit in die Behandlungskammer 3 gespritzt oder gesprüht, je nach Bedarf. Nach Beendigung des Reinigungszyklus wird die Pumpe abgeschaltet und das Ventil 48 geschlossen. Die gebrauchte Reinigungsflüssigkeit wird mit der Pumpe 49 abgepumpt und einem Reinigungsaggregat 50 zugeführt. Bei dem Reinigungsaggregat 50 kann es sich um eine Filteranlage handeln. Die gereinigte Flüssigkeit wird durch Öffnen des elektrisch betätigbaren Ventils 51 durch die Leitung 52 wieder dem Reinigungsmittelbehälter 8 zugeführt. Gebrauchte Spülflüssigkeit kann auf ähnliche Weise aus dem Spülflüssigkeitsbehälter 9 über die Leitung 53 und Pumpe 54 dem Reinigungsaggregat 50 zugeführt werden und im Ausführungsbeispiel zur Auffrischung der Reinigungsflüssigkeit in den Reinigungsmittelbehälter 8 gepumpt werden. Entsprechend sind die Pumpen 54 und 49 sowie die Ventile 55 und 55a zu steuern. Im Spülbetrieb der Anlage 1 ist Pumpe 47 abgeschaltet und die Pumpe 56 in Betrieb. Bei geöffnetem Ventil 57 wird über die Leitung 58 aus dem Spülflüssigkeitsbehälter 9 Spülflüssigkeit durch die Spritz- oder Sprühdüse 59 in die Behandlungskammer 3 geleitet. Zu erwähnen ist noch, dass reines Destillat aus dem Verdampfer 10 über die Leitung 60 und ggf. einem zwischengeschalteten Kondensator in den Auffangbehälter 11 gelangt. Von dort wird es über die Leitung 61, Ventil 62 und Pumpe 63 der Spülflüssigkeit zugesetzt. Zu erwähnen ist ferner, dass der Verdampfer 10 über die Leitung 64 mit gebrauchter Spülflüssigkeit gespeist wird.

Bei der Reinigungskammer 3a und der Spülkammer 3b nach Fig. 2 handelt es sich um Wannenbäder, die mit Waschflüssigkeit und Spülflüssigkeit gefüllt sind. In die Reinigungskammer 3a und die Spülkammer 3b sind dreh- oder schwenkbare Aufnahmen 4a für das Reinigungsgut eingebaut, die über je einen nicht dargestellten Elektromotor im Flüssigkeitsbad gedreht oder geschwenkt werden. Mit Hilfe des Leitungssystems 53a, den Ventilen 55b und 55c sowie der Pumpe 49 kann gebrauchte Reinigungs- oder Spülflüssigkeit aus der Reinigungskammer 3a oder der Spülkammer 3b durch ein Reinigungsaggregat 50 geleitet werden, und die gereinigte Flüssigkeit, in diesem Falle über die Leitung 52, wieder der Reinigungskammer 3a zugeleitet werden. Unabhängig davon kann über die Leitung 53 (Fig. 2) die Waschflüssigkeit in der Reinigungskammer 3a mit Spülflüssigkeit aus der Spülkammer 3b aufgefrischt werden.

An die Behandlungskammer 3 (Fig. 1) und Trocknungskammer 3c (Fig. 2) ist ein Luftkanal 41 angeschlossen, der vom Lufterhitzer 14 erhitzte Trocknungsluft in die Behandlungskammer 3 oder Trocknungskammer 3c einbläst. Der elektrische Gebläsemotor 42 ist über die Anschlussleitung 43 mit der Anschluss- und Verteileinrichtung 39 verbunden. Alternativ kann der Trocknungsvorgang reversibel gestaltet sein, d. h. im Saugbetrieb arbeiten. In die Trocknungskammer 3c ist ebenfalls eine Aufnahme 4a für das Waschgut eingebaut, die mit dem Elektromotor 65 angetrieben wird. Für das Befüllen der Kammern 3a, 3b mit Frischwasser ist die Pumpe 63 vorgesehen.

In der Zeichnung sind einige elektrische Anschlussleitungen von Ventilen und Pumpen nicht näher bezeichnet. Es sei jedoch bemerkt, dass alle nicht näher bezeichneten elektrischen Anschluss- und Verbindungsleitungen in die Anschluss- und Verteileinrichtung 39 des Generators 6 geführt sind und die entsprechenden elektrischen Einrichtungen über die Steuereinrichtung 7 überwacht geregelt und gesteuert werden.

## Patentansprüche

1. Industrielle Reinigungsanlage (1, 1a) zum Reinigen von Gegenständen, die mit öl-, fetthaltigen oder anderen Bearbeitungsrückständen verschmutzt sind und mit Behandlungsmedien behandelt werden, welche zur Verbesserung des Behandlungsergebnisses Prozesswärme benötigen, mit wenigstens einer Behandlungskammer (3) für das Behandlungsgut, mit einer elektrischen und elektronischen Steuereinrichtung (7) und mit elektrischen Aggregaten, nämlich Pumpen (20, 25, 47, 49, 54, 56, 63), Elektromotoren (42, 65), Ventilen (22, 26, 48, 51, 55, 55a, 55b, 55c, 57, 62), Kompressoren und elektrischen Heizeinrichtungen (30, 31, 32), das heißt Elektroheizkörpern, die geeignet sind zumindest in der Anlaufphase, also beim Hochfahren der Reinigungsanlage (1, 1 a), zur Prozesswärmeerzeugung beizutragen, **dadurch gekennzeichnet, dass** ein Blockheizkraftwerk mit einem flüssigkeitsgekühlten Verbrennungsmotor- (5) und einem Generator (6) vorgesehen ist, welches eine Kraft-Wärme-Kopplungsanlage (2) mit einem in einen Anlagenkreislauf, nämlich in den Prozesswärmekreislauf der Reinigungsanlage (1, 1a) integrierten Kühlflüssigkeitskreislauf bildet, dass der Kühlflüssigkeitskreislauf der Kraft-Wärme-Kopplungsanlage (2) zur Erwärmung der Behandlungsmedien in den Prozesswärmekreislauf der Reinigungsanlage (1, 1a) eingekoppelt ist, wobei der Träger der mittels Wärmetauschern (15, 16, 17) auf die Behandlungsmedien der Reinigungsanlage (1, 1 a) übertragenen Prozesswärme in einem geschlossenen Kreislauf der Kraft-Wärme-Kopplungsanlage (2) geführt ist und dass die industrielle Reinigungsanlage (1, 1a) derart ausgebildet ist, dass der elektrische Stromanteil der Kraft- Wärme-Kopplungsanlage (2) im Betrieb der Anlage für die elektrische und elektronische Steuereinrichtung (7) und die elektrischen Aggregate verwendet wird, wobei zur Deckung von Bedarfsspitzen, insbesondere in der Anlaufphase der Reinigungsanlage (1, 1a), der Stromanteil der Kraft- Wärme-Kopplungsanlage (2) zur Erzeugung von Prozesswärme für die Erwärmung der Behandlungsmedien durch die elektrischen Heizeinrichtungen (30, 31, 32) vorgesehen ist.

2. Reinigungsanlage nach Anspruch 1, **dadurch gekennzeichnet, dass** Prozesswärmebedarf und Elektrizitätsbedarf der Reinigungsanlage (1, 1a) auf das Verhältnis von erzeugter Prozesswärme zu abgegebener elektrischer Leistung der Kraft- Wärme-Kopplungsanlage (2) abgestimmt sind.

3. Reinigungsanlage nach Anspruch 1 oder 2, **dadurch gekennzeichnet, dass** der Energiebedarf der Reinigungsanlage (1, 1 a) etwa zu 70% als Prozesswärme und etwa zu 30% als elektrischer Strom aus der Kraft-Wärme-Kopplungsanlage (2) auskoppelbar ist.

4. Reinigungsanlage nach einem der Ansprüche 1 bis 3 **dadurch gekennzeichnet, dass** ein Verdampfer (10) vorgesehen ist, mit dessen Hilfe gebrauchte Reinigungs- oder Spülflüssigkeit durch Destillation zurückgewinnbar ist, und dass zum Betrieb des Verdampfers (10) Prozesswärme der Kraft-Wärme-Kopplungsanlage (2) in den Verdampfer (10) über Wärmetauscher (18) einkoppelbar ist.

5. Reinigungsanlage nach einem der Ansprüche 1 bis 3, **dadurch gekennzeichnet, dass** Reinigungsflüssigkeitsbehälter (8) und Spülflüssigkeitsbehälter (9) vorgesehen sind, in denen Elektroheizkörper (30, 31) eingebaut sind.

6. Reinigungsanlage nach einem der Ansprüche 1 bis 5 **dadurch gekennzeichnet, dass** in der Behandlungskammern (3), der Reinigungskammer (3a) und der Spülkammer (3b) Elektroheizkörper (30, 31) eingebaut sind.

7. Reinigungsanlage nach Anspruch 4 **dadurch gekennzeichnet, dass** zum Betrieb des Verdampfers (10) elektrischer Strom der Kraft-Wärme-Kopplungsanlage (2) zur Erwärmung der Verdampferflüssigkeit mittels Elektroheizkörper (32) einsetzbar ist.

8. Reinigungsanlage nach Anspruch 1, **dadurch gekennzeichnet, dass** Wärmetauscher (15, 16) in Reinigungsflüssigkeitsbehältern (8) oder in Spülflüssigkeitsbehältern (9) eingebaut sind.

9. Reinigungsanlage nach Anspruch 1, **dadurch gekennzeichnet, dass** Wärmetauscher (17) in Lufterhitzern (14) eingebaut sind.

10. Reinigungsanlage nach Anspruch 1, **dadurch gekennzeichnet, dass** Wärmetauscher (15,16) in der Behandlungskammer (3), der Reinigungskammer (3a) und der Spülkammer (3b) eingebaut sind.

11. Reinigungsanlage nach Anspruch 1, **dadurch gekennzeichnet, dass** die Kühlflüssigkeit des Verbrennungsmotors (5) als Reinigungs- oder Spülflüssigkeit dient.

12. Reinigungsanlage nach Anspruch 1 oder 11 **dadurch gekennzeichnet, dass** der Kühlkreislauf des Verbrennungsmotors (5) über Reinigungsflüssigkeitsbehälter oder Spülflüssigkeitsbehälter (8, 9) geführt ist.

13. Reinigungsanlage nach Anspruch 11 oder 12, **dadurch gekennzeichnet, dass** der Kühlkreislauf des Verbrennungsmotors (5) über die Behandlungskammer (3), die Reinigungskammer (3a) und die Spülkammer (3b) geführt ist.

## Claims

1. Industrial cleaning installation (1, 1a) for cleaning articles which are contaminated by oily, fatty or other processing residues and are treated with treatment media which need process heat for improving the results of treatment, said installation having at least one treatment chamber (3) for the material to be treated, having an electrical and electronic control apparatus (7) and having electrical units, namely pumps (20, 25, 47, 49, 54, 56, 63), electric motors (42, 65), valves (22, 26, 48, 51, 55, 55a, 55b, 55c, 57, 62), compressors and electrical heating apparatuses (30, 31, 32), that is to say electric heating elements, which are suitable, at least in the start-up phase, i.e. when the cleaning installation (1, 1a) is being run up, for contributing to the generation of process heat, **characterised in that**: a combined heat and power unit having a liquid-cooled combustion engine (5) and a generator (6) is provided, which constitutes a power-heat coupling installation (2) having a cooling-liquid circuit which is integrated into an installation circuit, namely into the process-heat circuit of the cleaning installation (1, 1a); that said cooling-liquid circuit of the power-heat coupling installation (2) is coupled into the process-heat circuit of the cleaning installation (1, 1a) for the purpose of warming up the treatment media, the carrier of the process heat which is transferred to the treatment media of the cleaning installation (1, 1a) by means of heat-exchangers (15, 16, 17) being conveyed in a closed circuit belonging to the power-heat coupling installation (2); and that the industrial cleaning installation (1, 1a) is constructed in such a way that the electrical current quota from the power-heat coupling installation (2) is used, when the installation is in operation, for the electrical and electronic control apparatus (7) and the electrical units, the current quota from the power-heat coupling installation (2) for generating process heat for the warming-up of the treatment media by the electric heating apparatuses (30, 31, 32) being intended to cover peak requirements, particularly in the start-up phase of the cleaning installation (1, 1a).

2. Cleaning installation according to Claim 1, **characterised in that** the process-heat requirement and the electricity requirement of the cleaning installation (1, 1a) are adapted to the ratio of generated process heat to delivered electrical output of the power-heat coupling installation (2).

3. Cleaning installation according to Claim 1 or 2, **characterised in that** about 70% of the energy requirement of the cleaning installation (1, 1a) can be decoupled from the power-heat coupling installation (2) as process heat, and about 30% as electrical current.

4. Cleaning installation according to one of Claims 1 to 3, **characterised in that** an evaporator (10) is provided, with the aid of which used cleaning or rinsing liquid can be recovered by distillation, and that, for the purpose of operating the evaporator (10), process heat from the power-heat coupling installation (2) can be coupled into said evaporator (10) via heat-exchangers (18).

5. Cleaning installation according to one of Claims 1 to 3, **characterised in that** cleaning-liquid containers (8) and rinsing-liquid containers (9) are provided, into which electric heating elements (30, 31) are incorporated.

6. Cleaning installation according to one of Claims 1 to 5, **characterised in that** electric heating elements (30, 31) are incorporated into the treatment chambers (3), the cleaning chambers (3a) and the rinsing chambers (3b).

7. Cleaning installation according to Claim 4, **characterised in that**, for operating the evaporator (10), electrical current from the power-heat coupling installation (2) can be used for warming up the evaporator liquid by means of electric heating elements (32).

8. Cleaning installation according to Claim 1, **characterised in that** heat-exchangers (15, 16) are incorporated into cleaning-liquid containers (8) or rinsing-liquid containers (9).

9. Cleaning installation according to Claim 1, **characterised in that** heat-exchangers (17) are incorporated into air-heaters (14).

10. Cleaning installation according to Claim 1, **characterised in that** heat-exchangers (15, 16) are incorporated into the treatment chamber (3), the cleaning chamber (3a) and the rinsing chamber (3b).

11. Cleaning installation according to Claim 1, **characterised in that** the cooling liquid of the combustion engine (5) serves as the cleaning or rinsing liquid.

12. Cleaning installation according to Claim 1 or 11, **characterised in that** the cooling circuit of the combustion engine (5) is routed via cleaning-liquid containers or rinsing-liquid containers (8, 9).

13. Cleaning installation according to Claim 11 or 12, **characterised in that** the cooling circuit of the combustion engine (5) is routed via the treatment chamber (3), the cleaning chamber (3a) and the rinsing chamber (3b).

## Revendications

1. Installation de nettoyage industrielle (1, 1a) pour le nettoyage d'objets encrassés aux résidus de traitement oléagineux, gras ou autres et traités avec des moyens de traitement nécessitant l'application d'une chaleur de processus industriel pour améliorer le résultat de traitement, avec au moins une chambre de traitement (3) prévue pour le produit de traitement, avec un dispositif de commande électrique et électronique (7) et avec des groupes électriques, notamment des pompes (20, 25, 47, 49, 54, 56, 63), des moteurs électriques (42, 65), des soupapes (22, 26, 48, 51, 55, 55a, 55b, 55c, 57, 62), des compresseurs et des dispositifs de chauffage électriques (30, 31, 32), c'est-à-dire des corps chauffants électriques adaptés pour contribuer, au moins dans la phase de démarrage, donc lors de la montée de l'installation de nettoyage (1, 1a), à la production de chaleur de processus industriel, **caractérisée en ce qu'**une centrale de chauffage de blocs équipée d'un moteur à combustion interne (5) à refroidissement liquide et d'un générateur (6) est prévue, ledit générateur formant une installation de couplage chaleur-force (2) avec un circuit de liquide de refroidissement intégré dans un circuit d'installation, notamment dans le circuit de chaleur de processus industriel de l'installation de nettoyage (1, 1a), que le circuit de liquide de refroidissement de l'installation de couplage chaleur-force (2) est couplé dans le circuit de chaleur de processus industriel de l'installation de nettoyage (1, 1a) pour le chauffage des agents de traitement, la composante porteuse de la chaleur de processus industriel transmise aux agents de traitement de l'installation de nettoyage (1, 1a) à l'aide des échangeurs thermiques (15, 16, 17) est guidé dans un circuit fermé de l'installation de couplage chaleur-force (2) et que l'installation de nettoyage industrielle (1, 1a) est réalisée de telle sorte que la partie de courant de l'installation de couplage chaleur-force (2) est utilisée en situation de fonctionnement de l'installation pour le dispositif de commande électrique et électronique (7) et les groupes électriques, la partie de courant de l'installation de couplage chaleur-force (2) étant prévue pour couvrir des pointes de besoin, notamment dans la phase de démarrage de l'installation de nettoyage (1, 1a), pour produire la chaleur de processus industriel servant au chauffage des agents de traitement par le biais des dispositifs de chauffage électriques (30, 31, 32).

2. Installation de nettoyage selon la revendication 1, **caractérisée en ce que** le besoin de chaleur de processus industriel et le besoin d'électricité de l'installation de nettoyage (1, 1a) sont coordonnées en fonction du rapport de la chaleur de processus industriel produite sur la puissance électrique fournie de l'installation de couplage chaleur-force (2).

3. Installation de nettoyage selon la revendication 1 ou 2, **caractérisée en ce que** le besoin d'énergie de l'installation de nettoyage (1, 1a) peut être sorti de l'installation de couplage chaleur-force (2) pour approximativement 70 % sous la forme de chaleur de processus industriel et pour approximativement 30 % sous la forme de courant électrique.

4. Installation de nettoyage selon l'une quelconque des revendications 1 à 3, **caractérisée en ce qu'**un évaporateur (10) est prévu à l'aide duquel le liquide de nettoyage ou de rinçage utilisé peut être récupéré par distillation et que pour faire fonctionner l'évaporateur (10), on peut envoyer la chaleur de processus industriel de l'installation de couplage chaleur-force (2) dans l'évaporateur (10) via l'échangeur thermique (18).

5. Installation de nettoyage selon l'une quelconque des revendications 1 à 3, **caractérisée en ce que** l'on prévoit le réservoir de liquide de nettoyage (8) et le réservoir de liquide de rinçage (9) dans lesquels on encastre les corps chauffants électriques (30, 31).

6. Installation de nettoyage selon l'une quelconque des revendications 1 à 5, **caractérisée en ce que** des corps chauffants électriques (30, 31) sont encastrés dans les chambres de traitement (3), la chambre de nettoyage (3a) et la chambre de rinçage (3b).

7. Installation de nettoyage selon la revendication 4, **caractérisée en ce que** le courant électrique de l'installation de couplage chaleur-force (2) peut être utilisé pour faire fonctionner l'évaporateur (10) en faisant chauffer le liquide d'évaporateur à l'aide des corps chauffants électriques (32).

8. Installation de nettoyage selon la revendication 1, **caractérisée en ce que** les échangeurs thermiques (15, 16) sont encastrés dans les réservoirs de liquide de nettoyage (8) ou dans les réservoirs de liquide de rinçage (9).

9. Installation de nettoyage selon la revendication 1, **caractérisée en ce que** des échangeurs thermiques (17) sont encastrés dans les radiateurs à air (14).

10. Installation de nettoyage selon la revendication 1, **caractérisée en ce que** des échangeurs thermiques (15, 16) sont encastrés dans la chambre de traitement (3), la chambre de nettoyage (3a) et la chambre de rinçage (3b).

11. Installation de nettoyage selon la revendication 1, **caractérisée en ce que** le liquide de refroidissement du moteur à combustion interne (5) sert de liquide de nettoyage ou de rinçage.

12. Installation de nettoyage selon la revendication 1 ou 11, **caractérisée en ce que** le circuit de refroidissement du moteur à combustion interne (5) est guidé via le réservoir de liquide de nettoyage ou via le réservoir de liquide de rinçage (8, 9).

13. Installation de nettoyage selon la revendication 11 ou 12, **caractérisée en ce que** le circuit de refroidissement du moteur à combustion interne (5) est guidé via la chambre de traitement (3), la chambre de nettoyage (3a) et la chambre de rinçage (3b).
